# EUROPEAN PATENT APPLICATION

(11) **EP 4 819 214 A1**
(43) Date of publication of application: **07.10.2026**
(21) Application number: 24897466.9
(22) Date of filing: 22.11.2024
(51) Int. Cl.: H01M 4/13, H01M 4/36, H01M 4/58, H01M 4/62, H01M 4/136

(54) **POSITIVE ELECTRODE FOR LITHIUM ION SECONDARY BATTERIES, AND LITHIUM ION SECONDARY BATTERY**

(30) Priority: 01.12.2023 JP 2023204088
(71) Applicant: Eliiy Power Co., Ltd., Tokyo 141-0032 (JP)
(72) Inventor: SAWANISHI, Keisuke, Tokyo 141-0032 (JP); ITO, Daichi, Tokyo 141-0032 (JP)
(74) Representative: Savi, Massimiliano
(86) International application number: PCT/JP2024/041478
(87) International publication number: WO 2025/115780

(57) **Abstract**

The present invention provides a positive electrode including a positive electrode active material layer that can be formed using a positive electrode active material slurry that is free from N-methylpyrrolidone. The positive electrode for a lithium-ion secondary battery of the present invention includes a positive electrode active material layer, and the positive electrode active material layer includes a positive electrode active material and a latex-derived aqueous polymer binder and has a thickness of 150 µm or more. A lithium-ion secondary battery of the present invention includes the above-described positive electrode, a negative electrode, a separator, and a non-aqueous electrolyte.

## Description

### TECHNICAL FIELD

The present invention relates to a positive electrode for a lithium-ion secondary battery and a lithium-ion secondary battery.

### BACKGROUND ART

A positive electrode active material layer of a lithium ion battery is usually produced by applying a slurry containing positive electrode active material particles, a PVdF-based binder, N-methylpyrrolidone, and a conductive additive onto a current collector, and drying the coating layer.

### SUMMARY OF THE INVENTION

### PROBLEMS TO BE SOLVED BY THE INVENTION

N-methylpyrrolidone is included in a list of restricted substances under the REACH Regulation due to concerns about its toxicity.

The present invention has been made in view of such circumstances and provides a positive electrode including a positive electrode active material layer that can be formed using a positive electrode active material slurry that is free from N-methylpyrrolidone.

### SOLUTION TO PROBLEM

The present invention provides a positive electrode for a lithium-ion secondary battery comprising a positive electrode active material layer, the positive electrode active material layer including a positive electrode active material and a latex-derived aqueous polymer binder and having a thickness of 150 µm or more.

### EFFECTS OF THE INVENTION

Since the positive electrode active material layer includes the latex-derived aqueous polymer binder, a favorable positive electrode active material layer can be formed using the positive electrode active material slurry (dispersion medium: water) that is free from N-methylpyrrolidone.

### BRIEF DESCRIPTION OF THE DRAWINGS

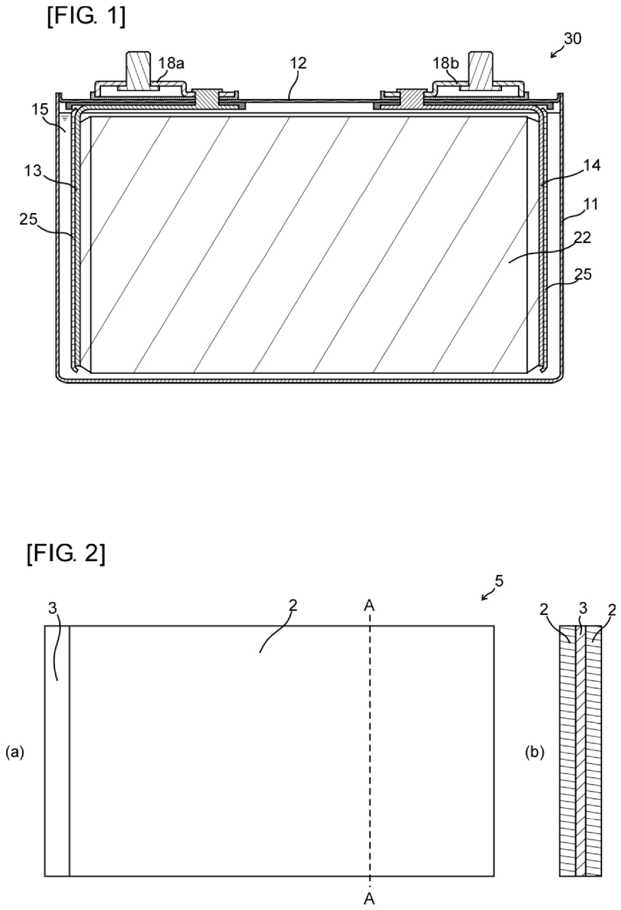

Fig. 1 is a schematic cross-sectional view of a lithium-ion secondary battery according to an embodiment of the present invention.
Fig. 2 (a) is a schematic plan view of a positive electrode included in the lithium-ion secondary battery according to an embodiment of the present invention, and Fig. 2 (b) is a schematic cross-sectional view of the positive electrode taken along a broken line A-A in Fig. 2 (a).
Fig. 3 (a) is a schematic plan view of a negative electrode included in the lithium-ion secondary battery according to an embodiment of the present invention, and Fig. 3 (b) is a schematic cross-sectional view of the negative electrode taken along a broken line B-B in Fig. 3 (a).
Fig. 4 is a schematic structural view of an electrode assembly included in the lithium-ion secondary battery according to an embodiment of the present invention.

### EMBODIMENT OF THE INVENTION

Hereinafter, an embodiment of the present invention will be described with reference to drawings. The configurations shown in the drawings and the following description are merely examples, and the scope of the present invention is not limited to those shown in the drawings or the following description.

A positive electrode 5 for a lithium-ion secondary battery according to the present embodiment includes a positive electrode active material layer 2, the positive electrode active material layer 2 including a positive electrode active material and an aqueous polymer binder derived from latex and having a thickness of 150 µm or more.

A lithium-ion secondary battery 30 according to the present embodiment includes the positive electrode 5 according to the present embodiment, a negative electrode 32, a separator 34, and a non-aqueous electrolyte 15.

The positive electrode 5 for a lithium-ion secondary battery is the positive electrode 5 included in the lithium-ion secondary battery 30 or the positive electrode 5 used for producing the lithium-ion secondary battery 30.

The positive electrode 5 for a lithium-ion secondary battery includes a positive electrode current collector 3 and the porous positive electrode active material layer 2 provided on the positive electrode current collector 3.

The positive electrode current collector 3 is a sheet serving as a substrate on which the positive electrode active material layer 2 is provided, and the positive electrode current collector 3 is a conductor that electrically connects a positive electrode connection member 13 and the positive electrode active material layer 2 to each other. The positive electrode current collector 3 is, for example, an aluminum foil. The positive electrode connection member 13 is electrically connected to an external connection terminal 18a. The positive electrode active material layer 2 may be provided on one side of the positive electrode current collector 3 or may be provided on both sides of the positive electrode current collector 3.

The positive electrode active material layer 2 is a layer containing a positive electrode active material. A thickness of the positive electrode active material layer 2 (after pressing) is 150 µm or more, and preferably 200 µm or more. This can increase the amount of the positive electrode active material contained in the positive electrode 5, thereby increasing battery capacity of the lithium-ion secondary battery 30. Furthermore, since the current collector 3 included in the lithium-ion secondary battery 30 can be reduced, a gravimetric energy density of the lithium-ion secondary battery 30 can be increased.

On the other hand, if the thickness of the positive electrode active material layer 2 is excessively large, a distance between the surface of the positive electrode active material layer 2 and the current collector 3 becomes too large, which may increase the electrode resistance. Accordingly, the thickness of the positive electrode active material layer 2 is preferably 500 µm or less, and more preferably 400 µm or less.

The positive electrode active material layer 2 includes the positive electrode active material and the latex-derived aqueous polymer binder. Also, the positive electrode active material layer 2 may include CMC (sodium carboxymethyl cellulose or calcium carboxymethyl cellulose). The positive electrode active material layer 2 may also include a thickening agent. The positive electrode active material layer 2 may also include a conductive agent. Further, the positive electrode active material layer 2 may include a surfactant.

As the positive electrode active material, lithium iron phosphate (LiFePO₄) is preferable. Other positive electrode materials can also be used, provided that they have good compatibility with the solvent of the positive electrode slurry.

As the lithium iron phosphate, lithium iron phosphate secondary particles that are secondary particles in which primary particles of lithium iron phosphate (LiFePO₄) are aggregated are preferable. Further, the positive electrode active material primary particles may have a conductive film on the surface. This can improve conductivity of the surfaces of the fine particles on which an intercalation reaction is progressing and can reduce the internal resistance of the positive electrode. The conductive film is, for example, a carbon film. The primary particles of lithium iron phosphate have an average particle size of, for example, 30 nm or more and 400 nm or less. The average particle size can be calculated by measuring particle sizes of 100 primary particles randomly selected in a cross-sectional photograph of the positive electrode active material layer 2 and arithmetically averaging these particle sizes.

The positive electrode active material layer 2 can include larger-diameter lithium iron phosphate secondary particles as a first positive electrode active material and smaller-diameter lithium iron phosphate secondary particles as a second positive electrode active material having a smaller particle size than the first lithium iron phosphate secondary particles.

The larger-diameter lithium iron phosphate secondary particles are lithium iron phosphate secondary particles having a particle size of 10 µm or more among a plurality of lithium iron phosphate secondary particles included in the positive electrode active material layer 2 and have an average particle size of 15 µm or more and 22 µm or less.

The smaller-diameter lithium iron phosphate secondary particles are lithium iron phosphate secondary particles having a particle size of less than 10 µm among the plurality of lithium iron phosphate secondary particles included in the positive electrode active material layer 2 and have an average particle size of 2 µm or more and 7 µm or less.

For example, the average particle size of the larger-diameter lithium iron phosphate can be obtained by measuring the particle sizes of 100 lithium iron phosphate secondary particles randomly selected in a cross-sectional photograph of the positive electrode active material layer 2 and arithmetically averaging the particle sizes of the secondary particles having a particle size of 10 µm or more among the secondary particles whose particle sizes have been measured; and the average particle size of the smaller-diameter lithium iron phosphate can be obtained by arithmetically averaging the particle sizes of the secondary particles having a particle size of less than 10 µm among the secondary particles whose particle sizes have been measured.

For example, when the particle sizes of 100 lithium iron phosphate secondary particles randomly selected in the cross-sectional photograph of the positive electrode active material layer 2 are measured, and a particle size distribution of the lithium iron phosphate secondary particles is created with particle size on the horizontal axis and number of particles on the vertical axis, a peak for the smaller-diameter lithium iron phosphate can be present in a range of 2 µm or more and 7 µm or less, and a peak for the larger-diameter lithium iron phosphate can be present in a range of 15 µm or more and 22 µm or less. This particle size distribution may not have a peak other than the two peaks of the peak for the larger-diameter lithium iron phosphate and the peak for the smaller-diameter lithium iron phosphate.

It is preferable that a ratio a:b of mass (b) of the second positive electrode active material to mass (a) of the first positive electrode active material be 7:3 to 9:1 (i.e., a ratio (b/a) of (1/9) or more and (3/7) or less). This ratio stabilizes the positive electrode slurry and the positive electrode active material layer 2. This ratio also improves the pressing characteristics of the positive electrode active material layer 2 and facilitates control of porosity.

The masses of the first positive electrode active material and the second positive electrode active material can be calculated from the density and particle size of the positive electrode active material particles. The density of the positive electrode active material particles can be measured and calculated using a positive electrode active material (powder) equivalent to the positive electrode active material particles included in the positive electrode active material layer 2. In addition, the measurement can be performed by dissolving the positive electrode active material layer 2 in a solvent or the like and recovering and classifying the positive electrode active material.

The conductive agent is, for example, fine particles of furnace black, acetylene black, carbon black, and coke-based soft carbon. By containing the conductive agent, the positive electrode active material layer 2 can improve conductivity and reduce the internal resistance of the positive electrode 5.

The latex-derived aqueous polymer binder is a polymer binder that can be colloidally dispersed in an aqueous dispersion medium. The aqueous polymer binder is, for example, an acrylic polymer binder, styrene-butadiene rubber (SBR), or the like. By using such a polymer binder, it is possible to use water or an aqueous solution as the dispersion medium for the positive electrode active material slurry used for forming the positive electrode active material layer 2. A glass transition temperature Tg of a polymer compound serving as the polymer binder is, for example, 20°C or less, preferably 10°C or less, and more preferably 0°C or less. This allows the polymer binder to exhibit flexibility and further improves binding properties.

Inclusion of the aqueous polymer binder in the positive electrode active material layer 2 can suppress peeling of the positive electrode active material layer 2 from the positive electrode current collector 3 and cracking of the positive electrode active material layer 2.

A ratio (d/c) of mass (d) of the latex-derived aqueous polymer binder included in the positive electrode active material layer 2 to mass (c) of the positive electrode active material contained in the positive electrode active material layer 2 (the sum of the mass of the first positive electrode active material and the mass of the second positive electrode active material) is, for example, (1/98.7) or more and (1.6/97.8) or less. This allows favorable binding properties to be obtained. Furthermore, since the amount of the binder is small, output characteristics of the lithium-ion secondary battery 30 can be improved. The mass of the latex-derived aqueous polymer binder included in the positive electrode active material layer 2 can be calculated, for example, from the mass of the aqueous polymer binder extracted from the positive electrode active material layer 2.

In addition, the positive electrode active material layer 2 can be produced with a smaller amount of binder than in a solvent-based system.

Further, the binding properties of positive electrode active material layer 2 to the positive electrode current collector 3 can be improved.

CMC (sodium carboxymethyl cellulose or calcium carboxymethyl cellulose) has a function of increasing the viscosity of the positive electrode active material slurry used for forming the positive electrode active material layer 2. CMC may function as a binder of the positive electrode active material layer 2. Inclusion of CMC in the positive electrode active material slurry can increase the viscosity of the positive electrode active material slurry and enable the positive electrode active material layer 2 to have a uniform thickness. Further, the positive electrode active material slurry can be applied in a thick coating, and the positive electrode active material layer 2 having a large thickness (for example, a thickness of 150 µm or more (after pressing)) can be formed.

A ratio (e/c) of mass (e) of CMC included in the positive electrode active material layer 2 to mass (c) of the positive electrode active material included in the positive electrode active material layer 2 (the sum of the mass of the first positive electrode active material and the mass of the second positive electrode active material) is, for example, (0.3/98.7) or more and (0.6/97.8) or less. This can suppress cracking of the positive electrode active material layer 2 during drying of a coating layer of the positive electrode active material slurry.

A total of the percentage of the latex-derived aqueous polymer binder and the percentage of CMC in the positive electrode active material layer 2 is, for example, 1.3 wt% or more and 2.0 wt% or less. This can suppress binding failure of the positive electrode active material layer 2 even when the positive electrode active material slurry is thickly applied by a single application to form a positive electrode active material layer having a thickness (after pressing) of 150 µm or more. This can also increase the battery capacity of the lithium-ion secondary battery including the positive electrode active material layer 2.

A ratio (d/e) of mass (d) of the polymer binder to mass (e) of CMC included in the positive electrode active material layer 2 may be 2.25 or more and 4.0 or less. This can suppress cracking of the positive electrode active material layer 2 even when the positive electrode active material slurry is applied in a thick coating by a single application to form a positive electrode active material layer having a thickness (after pressing) of 150 µm or more.

As for the positive electrode, the positive electrode active material layer 2 can be formed, for example, by mixing and kneading: the larger-diameter lithium iron phosphate secondary particles as the first positive electrode active material having an average particle size D50 in a range of 15 µm or more and 22 µm or less; the smaller-diameter lithium iron phosphate secondary particles as the second positive electrode active material having an average particle size D50 in a range of 2 µm or more and 7 µm or less; a latex of the aqueous polymer binder (an emulsion in which a polymer compound serving as the binder is colloidally dispersed in water); the CMC; and water or the aqueous solution to prepare the positive electrode active material slurry, applying the slurry onto the positive electrode current collector 3, and drying the coating layer. If necessary, a thickener may be added to the positive electrode active material slurry, or a small amount of a surfactant may be added to the positive electrode active material slurry. Further, the positive electrode active material layer 2 may be pressed. In the pressing treatment, for example, pressure may be applied to the positive electrode active material layer 2 such that a porosity of the positive electrode active material layer 2 falls within a range of 20% to 40%. An excessively low porosity leads to poor impregnation of an electrolytic solution 15, whereas an excessively high porosity increases the thickness of the positive electrode active material layer 2, thereby decreasing the volumetric energy density. The porosity is preferably 30% to 40%.

The positive electrode active material layer 2 may be produced by repeatedly applying thin layers in a coating process; however, in the positive electrode active material layer 2 produced by such repeated coating, contact resistance may occur at interfaces between the layers, which may increase the resistance. In addition, in repeated coating, the coated and dried layer may be dissolved by a solvent contained in the subsequently applied slurry, which may also cause deformation of the coating film. From the above, it is preferable that the positive electrode active material layer 2 be produced as a uniform thick layer by a single application.
As a reference example, the DCR resistance values of electrodes having a thickness of about 200 µm formed by one coating and two coatings are described below.

The single-layer electrode shows a resistance of 1.483 mΩ, whereas the two-layer electrode shows a resistance of 1.523 mΩ, indicating that the resistance is higher in the latter.

A negative electrode 32 is an electrode including a porous negative electrode active material layer 36. The negative electrode active material layer 36 is, for example, a porous layer including a negative electrode active material provided on a sheet-shaped negative electrode current collector 38. The negative electrode current collector 38 is electrically connected to a negative electrode connection member 14. The negative electrode connection member 14 is electrically connected to an external connection terminal 18b. The negative electrode current collector 38 is, for example, a copper foil.

The negative electrode active material is a substance that is directly involved in the transfer of electrons accompanying charge transfer in the negative electrode. The negative electrode active material is, for example, graphite, partially graphitized carbon, hard carbon, soft carbon, lithium titanate (LTO), or a Sn alloy. The negative electrode active material layer 36 can include one or more of these negative electrode active materials, either alone or in combination.

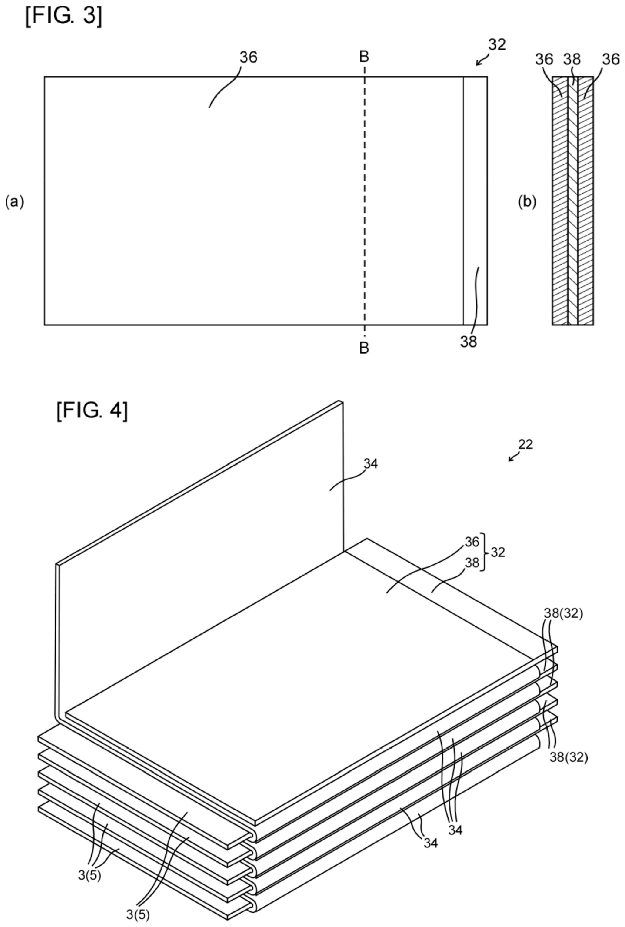

The separator 34 has a sheet shape and is disposed between the positive electrode 5 and the negative electrode 32. Further, the separator 34 can configure, together with the positive electrodes 5 and the negative electrodes 32, an electrode assembly 22 as shown in Fig. 4. By providing the separator 34, it is possible to prevent a short-circuit current from flowing between the positive electrode 5 and the negative electrode 32.

There is no particular limitation on the separator 34 if a short-circuit current can be prevented from flowing and if ions conducting between the positive electrode and the negative electrode can pass through the separator 34, and a microporous film of polyolefin, a cellulose sheet, or an aramid sheet can be used, for example. In addition, the separator 34 may be a nonwoven fabric including at least one of cellulose fiber, polyester fiber, polypropylene fiber, polyacrylonitrile fiber, and polyethylene terephthalate fiber.

As shown in Fig. 4, the electrode assembly 22 may have a structure in which a plurality of positive electrodes 5 and a plurality of negative electrodes 32 are stacked such that the positive electrodes 5 and the negative electrodes 32 are alternately disposed. In addition, the electrode assembly 22 may have a structure in which the separator 34 is disposed between the adjacent positive electrode 5 and negative electrode 32.

As the solvent for the non-aqueous electrolyte 15, carbonates, lactones, ethers, esters, ionic liquids, and the like can be used, and two or more of these solvents can also be mixed and used. In particular, a cyclic carbonate and a chain carbonate of these solvents are preferably mixed and used. The non-aqueous electrolyte 15 is, for example, a solution in which a lithium salt solute such as LiCF₃SO₃, LiAsF₆, LiClO₄, LiBF₄, LiPF₆, LiBOB, LiN (CF₃SO₂)₂, or LiN(C₂F₅SO₂) is dissolved in an organic solvent. If necessary, additives such as VC (vinylene carbonate), PS (propane sultone), VEC (vinyl ethyl carbonate), PRS (propene sultone), and a flame retardant may be blended alone or in combination of two or more.

A battery cell case 11 is a battery cell outer casing that houses the electrode assembly 22 (including the positive electrode 5, the negative electrode 32, and the separator 34) and the nonaqueous electrolyte 15. The battery cell case 11 may be made in a pouch shape made by welding a laminated film at a welding portion. In this case, the lithium-ion secondary battery 30 is a pouch battery. Alternatively, the battery cell case 11 may be a metal case or a hard resin case. The battery cell case 11 may have a lid member 12.

### Production 1 of Positive Electrode for Lithium-Ion Secondary Battery

Mixture was prepared by mixing carbon-coated lithium iron phosphate secondary particles A (average particle size (D50): 18 µm) and carbon-coated lithium iron phosphate secondary particles B (average particle size (D50): 4 µm) at a mass ratio of 9:1, an acrylic polymer binder solution (latex-dispersed aqueous solution, AXA391, effective component concentration: 40 wt%, glass transition temperature Tg: -35°C, pH: 7-9, B-type viscosity: 5-50 cP, average particle size: 180 µm, particle size distribution having a peak at 170 µm (100-500 µm)), and sodium carboxymethyl cellulose (CMC; BSH6, manufactured by Dai-ichi Kogyo Seiyaku Co., Ltd.; degree of etherification: 0.65-0.75; viscosity of 1% CMC aqueous solution at 25°C: 3000-4000 mPa·s; average degree of polymerization: 1200-1350; average molecular weight: 255,000-270,000). Table 1 shows the mass percentages of the total positive electrode active materials, the CMC (solid content), the acrylic polymer binder (solid content), and total of the CMC (solid content) and the acrylic polymer binder (solid content) in the produced positive electrode active material layers. These materials were mixed and kneaded with water as a dispersion medium to prepare positive electrode active material slurry. The positive electrode active material slurry was applied once onto an aluminum foil (positive electrode current collector sheet), and the coating film was dried and further pressed to form a positive electrode active material layer having a thickness of 221 µm on one surface of the positive electrode current collector sheet, thereby producing positive electrodes. No cracking was observed in the positive electrode active material layers after drying.

**[Table 1]**

| Secondary Particles A : Secondary Particles B = 9 : 1 | | | | | | |
|---|---|---|---|---|---|---|
| | Positive Electrode Active Material (wt%) | Acrylic Polymer Binder (wt%) | CMC (wt%) | Mass percentage of Total Binder (wt%) | Mass Ratio (b/a) of Acrylic Polymer Binder (b) to CMC (a) | Capacity per Unit Mass of Positive Electrode Active Material Layer (mAh/g) |
| Comparative Example 1 | 98.80 | 0.80 | 0.4 | 1.20 | 2.00 | 129.8 |
| Working Example 1 | 98.70 | 1.00 | 0.3 | 1.30 | 3.33 | 138.1 |
| Working Example 2 | 98.60 | 1.00 | 0.4 | 1.40 | 2.50 | 141.6 |
| Working Example 3 | 98.35 | 1.25 | 0.4 | 1.65 | 3.13 | 136.9 |
| Working Example 4 | 98.00 | 1.60 | 0.4 | 2.00 | 4.00 | 131.1 |
| Working Example 5 | 98.05 | 1.35 | 0.6 | 1.95 | 2.25 | 130.1 |
| Comparative Example 2 | 97.90 | 1.50 | 0.6 | 2.10 | 2.50 | 128.7 |
| Comparative Example 3 | 97.60 | 2.00 | 0.4 | 2.40 | 5.00 | 105.1 |
| Comparative Example 4 | 98.40 | 1.00 | 0.6 | 1.60 | 1.67 | 102.1 |

### Production 2 of Positive Electrode for Lithium-Ion Secondary Battery

Positive electrodes were prepared by changing the mass ratio of lithium iron phosphate secondary particles A to lithium iron phosphate secondary particles B to 7:3. Table 2 shows the mass percentages of the total positive electrode active materials, the CMC (solid content), the acrylic polymer binder (solid content), and total of CMC (solid content) and the acrylic polymer binder (solid content) in the produced positive electrode active material layers, as well as the mass ratio (b/a) of the acrylic polymer binder (b) to CMC (a). The positive electrodes were prepared in the same manner as in Production 1, thereby forming positive electrode active material layers having a porosity of 34% and a thickness of 214 µm on one side of the positive electrode current collector sheet. No cracking was observed in the positive electrode active material layers after drying.

**[Table 2]**

| Secondary Particles A : Secondary Particles B = 7 : 3 | | | | | | |
|---|---|---|---|---|---|---|
| | Positive Electrode Active Material (wt%) | Acrylic Polymer Binder (wt%) | CMC (wt%) | Mass percentage of Total Binder (wt%) | Mass Ratio (b/a) of Acrylic Polymer Binder (b) to CMC (a) | Capacity per Unit Mass of Positive Electrode Active Material Layer (mAh/g) |
| Comparative Example 5 | 98.80 | 0.8 | 0.4 | 1.20 | 2.00 | 118.6 |
| Working Example 6 | 98.60 | 1.0 | 0.4 | 1.40 | 2.50 | 132.0 |
| Working Example 7 | 98.40 | 1.2 | 0.4 | 1.60 | 3.00 | 133.5 |
| Working Example 8 | 98.00 | 1.6 | 0.4 | 2.00 | 4.00 | 130.4 |
| Comparative Example 6 | 97.80 | 1.8 | 0.4 | 2.20 | 4.50 | 120.7 |

Next, the produced positive electrode, a polyolefin separator, a metallic lithium negative electrode, and a non-aqueous electrolyte (a 1M LiPF₆ electrolyte (carbonate-based solvent)) were placed in a coin cell case to produce lithium ion secondary batteries (coin cells) of Working Examples 1 to 8 and Comparative Examples 1 to 6.

### Charge-Discharge Test

A charge/discharge test was performed using the lithium-ion secondary batteries of Working Examples 1 to 8 and Comparative Examples 1 to 6. Specifically, charge-discharge was performed at 1 C with an upper cut-off voltage of 3.6 V and a lower cut-off voltage of 2.0 V, and battery capacity (discharge capacity) per unit mass of the positive electrode active material layer (mAh/g) was calculated from the discharge current value. The calculated battery capacities are shown in Tables 1 and 2. From Table 1 and Table 2, it was found that when the total of the percentage of the acrylic polymer binder and the percentage of CMC in the positive electrode active material layer is set to 1.3 wt% or more and 2.0 wt% or less, the lithium-ion battery exhibits a battery capacity of 130 mAh or more, indicating that a favorable electrode is obtained. It was also found that a favorable electrode can be obtained by setting the ratio (b/a) of the mass (b) of the acrylic polymer binder to the mass (a) of CMC included in the positive electrode active material layer to 2.25 or more and 4.0 or less.

### Tape Peeling Test

A tape peeling test was performed using the positive electrodes of Working Examples 1 and 4 and the positive electrodes of Comparative Examples 1, 3, and 4.

The positive electrode was cut into a size of 5 cm × 5 cm. A tape (cloth tape No. 1535 manufactured by Teraoka Seisakusho Co., Ltd.; adhesive strength: 11.53 N/25 mm; tensile strength: 120.7 N/25 mm; width: 50 mm) was applied over the entire surface of the positive electrode active material layer and left for 1 hour. Thereafter, the tape was peeled off from the positive electrode at a 90-degree angle at a speed of 300 mm/min. The results are shown in Table 3.

**[Table 3]**

| | Positive Electrode Active Material (wt%) | Binder (wt%) | | CMC (wt%) | Binder + CMC (wt%) | Peeling Test Results |
|---|---|---|---|---|---|---|
| Comparative Example 1 | 98.7 | Acrylic-Based | 0.8 | 0.4 | 1.2 | Acceptable |
| Working Example 1 | 98.7 | Acrylic-Based | 1.0 | 0.3 | 1.3 | Exellent |
| Working Example 4 | 98.1 | Acrylic-Based | 1.6 | 0.4 | 2.0 | Exellent |
| Comparative Example 3 | 97.6 | Acrylic-Based | 2.0 | 0.4 | 2.4 | Exellent |
| Comparative Example 4 | 98.4 | Acrylic-Based | 1.0 | 0.6 | 1.6 | Not Acceptable |
| Reference Example 1 | 96.5 | PvdF | 3.5 | - | 3.5 | Exellent |
| Reference Example 2 | 98.0 | PvdF | 2.0 | - | 2.0 | Not Acceptable |

No peeling of the positive electrode active material layer was observed in the positive electrodes of Working Examples 1 and 4 and Comparative Example 3.

Peeling of the positive electrode active material layer was observed at an edge portion in the positive electrode of Comparative Example 1. It is considered that the binding properties were weak because the total of the acrylic polymer binder proportion and the CMC proportion was less than 1.3 wt%.

In Comparative Example 4, the positive electrode active material layer was cracked, and a considerable amount of fragments adhered to the tape, exposing the current collector foil of the positive electrode. It is considered that the mass ratio (b/a) of the acrylic polymer binder (b) to CMC (a) exceeding 4.0 resulted in the hard layer prone to cracking.

The measurement results in the case where the binder was changed to PvdF are also shown in Table 3 for reference. When the mass ratio of the binder in the positive electrode active material was 3.5 wt% (Reference Example 1), no peeling occurred; however, when the mass ratio was 2.0 wt%, which was similar to that of the acrylic polymer binder (Reference Example 2), peeling occurred.

In addition, a plurality of positive electrodes including positive electrode active materials different from each other in the positive electrode active material layer were fabricated and subjected to a tape peeling test.

The results of the tape peeling test are shown in Table 4.

**[Table 4]**

| Positive Electrode Active Material in Positive Electrode Active Material Layer | Positive Electrode Active Material (wt%) | Binder (wt%) | CMC (wt%) | Binder + CMC (wt%) | Peeling Test Results |
|---|---|---|---|---|---|
| Secondary Particles B Only | 98.5 | 1.1 | 0.4 | 1.5 | Exellent |
| Secondary Particles A and B (9 : 1) | 98.5 | 1.1 | 0.4 | 1.5 | Exellent |
| Secondary Particles A and B (9 : 1) | 98.1 | 1.5 | 0.4 | 1.9 | Exellent |
| Secondary Particles A and B (7 : 3) | 98.1 | 1.5 | 0.4 | 1.9 | Exellent |
| Secondary Particles A Only | 98.1 | 1.5 | 0.4 | 1.9 | Not Acceptable |

No peeling of the positive electrode active material layer was observed in either the positive electrode in which the positive electrode active material included in the positive electrode active material layer was only the secondary particles B (smaller-diameter positive electrode active material), or the positive electrode in which the secondary particles B (smaller-diameter) and the secondary particles A (larger-diameter) were mixed in the positive electrode active material layer. However, in the positive electrode in which only the secondary particles A (larger-diameter) were included in the positive electrode active material layer, the positive electrode active material layer was broken, a considerable amount of fragments adhered to the tape, exposing the current collector foil of the positive electrode.

In addition, when the positive electrode slurry was produced using only the secondary particles B (smaller-diameter), it was observed that the slurry exhibited poor stability, with solid components beginning to sediment in a short time and gelation occurring. This may deteriorate productivity of the positive electrode.

### Preparation Example of Lithium-Ion Battery

A positive electrode was produced using the mass ratio of the positive electrode active material layer of Working Example 2, thereby forming a positive electrode active material layer (length: 142 mm, width: 84.5 mm) having a porosity of 38% and a thickness of 221 µm.

94 wt% (solid content basis) graphite powder, 5 wt% (solid content basis) SBR-based binder, and 1 wt% (solid content basis) sodium carboxymethyl cellulose (CMC, manufactured by DKS Co. Ltd., EP) were mixed. Water was added to the mixed powder and kneaded to prepare a negative electrode active material slurry. The negative electrode active material slurry was applied onto a copper foil (negative electrode current collector sheet), and the coating film was dried and further pressed to form a negative electrode active material layer having a thickness of 82.5 µm (length: 145 mm, width: 86.8 mm) on one surface of the negative electrode current collector sheet, thereby producing a negative electrode.

Next, the produced positive electrode, a separator (three-layer separator manufactured by Toray Industries, Inc.), the produced negative electrode, and a non-aqueous electrolyte (1.2 M LiPF₆ electrolyte solution (carbonate-based electrolyte solution)) were placed in a battery cell case, thereby obtaining a lithium-ion secondary battery having a capacity of 63 Ah.

### DESCRIPTION OF REFERENCE SIGNS

2: Positive electrode active material layer
3: Positive electrode current collector
5: Positive electrode
11: Battery cell case
12: Lid member
13: Positive electrode connection member
14: Negative electrode connection member
15: Non-aqueous electrolyte
18a, 18b: External connection terminal
22: Electrode assembly
25: Shrink film
30: Lithium-ion secondary battery
32: Negative electrode
34: Separator
36: Negative electrode active material layer
38: Negative electrode current collector

## Claims

1. A positive electrode for a lithium-ion secondary battery, comprising a positive electrode active material layer, the positive electrode active material layer including a positive electrode active material and an aqueous polymer binder derived from latex and having a thickness of 150 µm or more.

2. The positive electrode according to claim 1, wherein the positive electrode active material layer comprises first and second positive electrode active materials having different particle sizes, the first positive electrode active material has an average particle size of 15 µm or more and 22 µm or less, and the second positive electrode active material has an average particle size of 2 µm or more and 7 µm or less.

3. The positive electrode according to claim 2, wherein a ratio (b/a) of a mass (b) of the second positive electrode active material to a mass (a) of the first positive electrode active material is (1/9) or more and (3/7) or less.

4. The positive electrode according to claim 3, wherein the first and second positive electrode active materials included in the positive electrode active material layer are each lithium iron phosphate secondary particles.

5. The positive electrode according to claim 1, wherein the positive electrode active material layer further comprises sodium carboxymethyl cellulose or calcium carboxymethyl cellulose, and a total (c + d) of a mass (c) of the aqueous polymer binder and a mass (d) of the sodium carboxymethyl cellulose or the calcium carboxymethyl cellulose included in the positive electrode active material layer is 1.3 wt% or more and 2.0 wt% or less with respect to a mass of the positive electrode active material layer.

6. The positive electrode according to claim 5, wherein a ratio (c/d) of the mass (c) of the aqueous polymer binder included in the positive electrode active material layer to the mass (d) of the sodium carboxymethyl cellulose or the calcium carboxymethyl cellulose included in the positive electrode active material layer is 2.25 or more and 4.0 or less.

7. A lithium-ion secondary battery comprising the positive electrode according to any one of claims 1 to 6, a negative electrode, a separator, and a non-aqueous electrolyte.
